# EUROPÄISCHE PATENTSCHRIFT

(11) **EP 0 844 916 B1**
(45) Veröffentlichungstag und Bekanntmachung des Hinweises auf die Patenterteilung: **21.06.2000**
(21) Anmeldenummer: 96934343.3
(22) Anmeldetag: 08.08.1996
(51) Int. Cl.: B09C 1/06, B09B 3/00

(54) **VERFAHREN ZUR DEKONTAMINIERUNG VON SCHLUFF, SCHADSTOFFE UND WASSER ENTHALTENDEN SUSPENSIONEN**
PROCESS FOR DECONTAMINATION OF SUSPENSIONS CONTAINING SILT, POLLUTANTS AND WATER
PROCEDE DE DECONTAMINATION DE SUSPENSIONS CONTENANT DU SILT, DES POLLUANTS ET DE L'EAU

(30) Priorität: 16.08.1995 DE 19529998
(43) Veröffentlichungstag der Anmeldung: 03.06.1998
(73) Patentinhaber: GKSS-FORSCHUNGSZENTRUM GEESTHACHT GMBH, 21502 Geesthacht (DE)
(72) Erfinder: LUTHER, Günter, D-21502 Geesthacht (DE); WIETSTOCK, Peter, D-21502 Geesthacht (DE)
(74) Vertreter: Niedmers, Ole, Dipl.-Phys.
(86) Internationale Anmeldenummer: DE9601479
(87) Internationale Veröffentlichungsnummer: WO9706899

(56) Entgegenhaltungen:
- WO-A-93/06946
- WO-A-94/06946
- WO-A-94/29039
- DE-A- 2 724 271

## Beschreibung

Die Erfindung betrifft ein Verfahren zur Dekontaminierung von Schluff, Schadstoffe und Wasser enthaltenden Suspensionen, insbesondere Quecksilber und/oder Kohlenwasserstoff enthaltenden Schadstoffen.

Schadstoffe, die in einem Temperaturbereich bis 300°C in die Dampfphase überführt werden können, werden in der Regel mit Hilfe von Drehöfen, Schachtöfen oder Wirbelbettverfahren aus dem zu reinigenden Gemenge, beispielsweise kontaminiertem Boden, ausgetrieben. Da Schluffgemische regelmäßig erosiv sind, führen sie zu einem erheblichen Wartungsaufwand an allen drehenden Teilen der bekannten Öfen bzw. Einrichtungen. Darüber hinaus erfordert das Prinzip des Drehofens oder des Wirbelbetts ein einheitliches, meist palettiertes zu reinigendes Gemenge, und es ist dazu erforderlich, die bei der mechanischen Reinigung des Gemenges anfallende wäßrige Fraktion vorzutrocknen. Häufig wird zusätzlich zur Unterstützung des Austriebs der Schadstoffe unter Vakuum von 0,1 bar und niedriger gearbeitet. Aufgrund der erodierenden Wirkung des Gemenges bzw. der Schluffgemische treten bei den bekannten Drehöfen bzw. Wirbelbetten und dergleichen bei drehenden Teilen und Dichtungen zu erheblichen Dichtigkeitsproblemen und somit Wartungsprobleme auf. Das bei derartigen Anlagen verhältnismäßig hohe Vakuum erfordert aus Sicherheitsgründen eine hohe Dichtigkeit von Anlagen mit großvolumigen Apparaten, wie z.B. Drehöfen. Ein Zusammenbruch des Vakuums ist in der Regel mit langen Zeiten für das erneute Inbetriebsetzen derartiger Anlagen und darüber hinaus komplexen Inbetriebnahmeproblemen verbunden.

Aus der WO-A-93 06 946 ist ein Verfahren zur Reinigung granularer und partikelförmiger Feststoffe bekannt, die mit leicht flüchtigen bzw. verdampfbaren organischen Verbindungen kontaminiert sind. Dabei werden die Feststoffe in einem geschlossenen Behälter mit Dampf unter weit über Atmosphärendruck liegendem Druck beaufschlagt, wobei der Dampf und die Feststoffe einen vorbestimmten Temperaturbereich erreichen. Nachfolgend wird der Druck über den Feststoffen auf einen niedrigeren Druckpegel durch das Abblasen von Dampf und verdampften organischen Bestandteilen gesenkt, wobei schließlich der abgeblasene Dampf und die leicht flüchtigen organischen Bestandteile, die darin enthalten sind, kondensiert werden. Nachfolgend soll schließlich ein gereinigtes Feststoffprodukt gewinnbar sein.

Aus der WO-A-94 29 039 ist ein Verfahren zur Reinigung von verunreinigtem Bodenmaterial bekannt. Das Bodenmaterial soll gemäß dem bekannten Verfahren in einem ersten Schritt zerkleinert und in einem zweiten Schritt wärmebehandelt werden. Im zweiten Schritt soll das Bodenmaterial ohne Kontakt mit einer offenen Flamme über Wärmetauscher auf eine Temperatur oberhalb der Siedetemperatur von Wasser und unterhalb einer Temperatur von 400° C erhitzt werden. Anschließend soll das erhitzte, feinkörnige Bodenmaterial heißem, gegebenenfalls überhitztem Wasserdampf ausgesetzt werden, welcher die flüchtigen Bestandteile aus dem Bodenkorn lösen soll.

Es ist deshalb Aufgabe der vorliegenden Erfindung, ein Verfahren der eingangs genannten Art zu schaffen, bei dem eine Vortrocknung und Palettisierung der von Schadstoffen zu befreienden Suspensionen nicht nötig ist und drehende Vorrichtungen ebenfalls entbehrlich sind, so daß das erfindungsgemäße Verfahren leicht, einfach und effektiv durchgeführt werden kann und sich auch zur Reinigung von großvolumig anfallenden Gemischen bzw. Suspensionen eignet, so daß das Verfahren auch einen wirksamen Beitrag zur Dekontaminierung stark schadstoffbelasteter Böden auch unter Umweltschutzgedanken liefert.

Gelöst wird die Aufgabe gemäß der Erfindung dadurch, daß die Suspension unter Druck auf Siedetemperatur erwärmt wird und nachfolgend einer Drosseleinrichtung zugeführt wird, wobei das aus sich entwickelndem Dampf, Restwasser und Feststoff bestehende Dreiphasengemisch danach einem Rohrreaktor zugeführt wird und dort mittels weiterer Energiezufuhr überhitzt wird, wobei sich in der überhitzten Dampfphase die Schadstoffe anreichern, so daß diese schließlich nach vorheriger Abtrennung der Feststoffe durch Kondensation in flüssiger Form gewinnbar sind.

Der wesentliche Vorteil der erfindungsgemäßen Lösung besteht darin, daß auch stark kontaminierte Gemische und Suspensionen, insbesondere stark kontaminierte Böden, in großtechnischem Maße auf effektive Weise gereinigt werden können, wobei beispielsweise eine Suspension, die vor der Reinigung 500 mg/kg Quecksilber (TS) enthielt, nach Abschluß des erfindungsgemäßen Verfahrens lediglich einen geringen Restgehalt von 1 mg/kg TS Quecksilber enthielt. Das erfindungsgemäße Verfahren kann dabei vorteilhafterweise so ausgeführt werden, daß die dazu benötigten Vorrichtungen völlig frei von durch Erosion belastenden drehenden Teilen sind, d.h. keine drehenden Teile in der Vorrichtung benötigt werden und keine Kalzinierung der Oberfläche der Vorrichtungen durch partielles Austrocknen und Erhitzen zu erwarten ist und grundsätzlich auch keine Vortrocknung benötigt wird. Infolge des Verzichts drehender Teile bei Vorrichtungen und Anordnungen zur Ausführung des erfindungsgemäßen Verfahrens ergibt sich darüber hinaus auch ein extrem geringer Wartungsaufwand für eine derartige Vorrichtung bzw. Anordnung und somit eine einfache Verfahrensführung des erfindungsgemäßen Verfahrens schlechthin.

Bei einer vorteilhaften Ausgestaltung des Verfahrens wird die Dichte der Suspension bei beispielsweise ≥ 1,2 kg/l eingestellt, und die Suspension wird bei einem Druck im Bereich von 12 - 30 bar erwärmt, was beispielsweise durch Direktdampfzugabe erfolgen kann, so daß die Suspension auf 100 °C vorgewärmt wird. Dadurch wird die Suspension fließfähig und kann dadurch ohne gesonderte Fördermaßnahmen dem Rohrreaktor eigenständig zugeführt werden.

Die Energiezufuhr im Rohrreaktor zur Bildung des Dreiphasengemisches aus der Suspension zur Erzeugung der überhitzten Dampfphase kann vorteilhafterweise durch Injektion überhitzten Dampfes und/oder durch die Verbrennung von Wasserstoff und Sauerstoff und/oder Methan und Sauerstoff im Rohrreaktor erfolgen.

Dabei kann vorteilhafterweise in den Reaktor in einem nicht stöchiometrischen Verhältnis zusätzlich Sauerstoff zur Einleitung hydrierender oder oxidierender Reaktionen der Schadstoffe in der Suspension bzw. im Dreiphasengemisch gegeben werden.

Weiterhin ist es vorteilhaft, daß das Dreiphasengemisch im Reaktor bei einem Reaktorinnendruck von 0,7 - 0,9 bar behandelt wird, wobei dieser Unterdruck ausschließlich der Sicherheit dient, d.h. bei Undichtigkeiten von Vorrichtungsteilen dringt Umgebungsluft in das System, nicht jedoch Schadstoff, beispielsweise Quecksilber, in die Atmosphäre.

Bei einer weiteren vorteilhaften Ausgestaltung des Verfahrens wird das den Rohrreaktor verlassende Gemisch aus dampfförmigen Schadstoffen und Feststoffen in einem Feststoffabscheider (Zyklon) getrennt, wobei grundsätzlich beliebige geeignete Feststoffabscheider dafür herangezogen werden können.

Der bei dem erfindungsgemäßen Verfahren verwendete Kondensator zur Kondensation der Schadstoffe wird regelmäßig keine Absolutkondensation des gesamten anfallenden gasförmigen Schadstoffes durchführen können. Es wird regelmäßig ein nicht kondensierbarer Anteil der gasförmigen Schadstoffe anfallen, wobei dieser nicht kondensierbare Anteil vorzugsweise in einer nachgeschalteten Gasreinigungsstufe einer nochmaligen Gasreinigung unterzogen wird, wobei als Gasreinigungsstufen geeignete bekannte Vorrichtungen herangezogen werden können.

Vorzugsweise wird jedoch der Entzug der Schadstoffe bei der Gasreinigung mittels Aktivkohle durchgeführt, d.h. das nicht kondensierte Restgas wird an den Kontaktflächen von Aktivkohle adsorbiert.

Schließlich wird das zur Kondensation der Schadstoffe im Kondensator benötigte Wasser vorzugsweise mittels eines Membrantrennverfahrens gereinigt und wenigstens teilweise erneut zur Kondensation der Schadstoffe verwendet, d.h. das Kondensationswasser wird wenigstens teilweise in einem Kreisprozeß immer wieder dem Kondensator zugeführt, so daß das Verfahren auf Fremdwasser verzichten kann.

Die Erfindung wird nun unter Bezugnahme auf die einzige schematische Zeichnung anhand eines Ausführungsbeispieles im einzelnen beschrieben. Diese zeigt:
in Form eines Blockschaltbildes eine Anlage zur Ausführung des erfindungsgemäßen Verfahrens, wobei die Anlage in die Bereiche Aufarbeitung, Trennung und Reinigung, jeweils getrennt durch die vertikal verlaufende gestrichelte Linie getrennt und bei der Betrachtung von links nach rechts dargestellt ist.

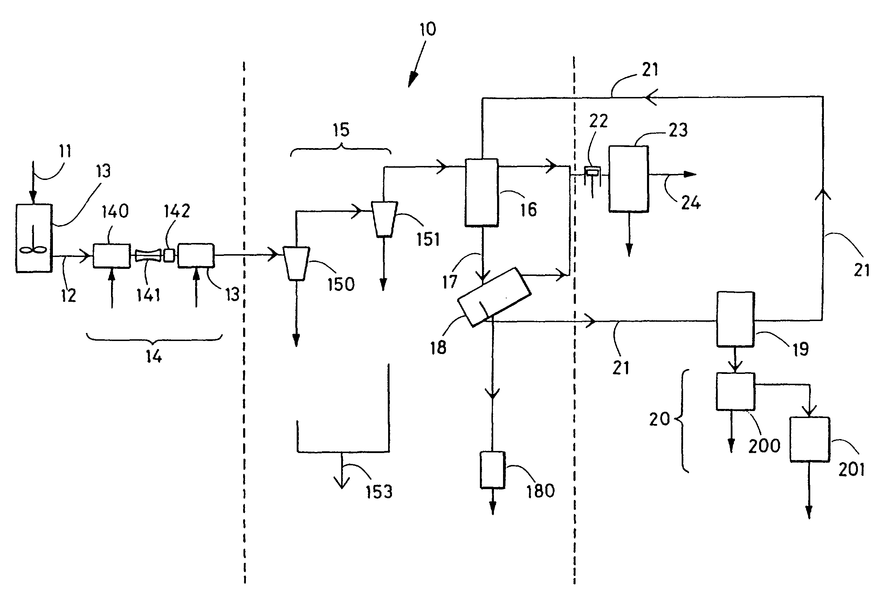

Bevor auf den Verfahrensablauf im einzelnen eingegangen wird, wird zunächst eine Anlage 10, wie sie aus der einzigen Figur ersichtlich ist, zur Dekontamierung von Schluff, Schadstoffen und Wasser enthaltenden Suspensionen 12 beschrieben. Das zu dekontamierende Gemisch, das beispielsweise mit Quecksilber kontaminiertes Erdreich sein kann, wird einem Rührkessel 13 zugeführt, wo es in Suspension gehalten wird und bei einem Druck von 10 - 20 bar durch die Direktdampfzugabe auf eine Temperatur bis ca. 100 °C vorgewärmt wird. Die Suspension 12 fließt aufgrund ihrer Behandlung im Rührkessel 13 mit teilweise nicht-newton'schem Fließverhalten einem Rohrreaktor 14 zu.

Der Rohrreaktor 14 besteht hier aus 3 Teilen, nämlich einem Injektor 140, einer nachgeschalteten Drossel 141 und einer Überhitzerstrecke 142 und schließlich einem dieser nachgeschalteten Dampfinjektor 143. Der Injektor 140 wird mit überhitztem Dampf betrieben, wobei diese Zufuhr überhitzten Dampfes zur weiteren Aufheizung der Suspension 12 bis auf annähernd Siedetemperatur dient. Nachfolgend gelangt die Suspension 12 in eine Drossel 141 und dieser nachfolgend in eine Überhitzerstrecke 142 und schließlich dieser nachfolgend zum Dampfinjektor 143.

Im Rohrreaktor 14 sind hier nicht dargestellte Verdrängungskörper angeordnet, die bei Unterschreitung der kritischen Transporttemperatur der Suspension 12 dienen und gleichzeitig dafür sorgen, daß eine ausreichende Turbulenz im Reaktorraum erzeugt wird, damit die Innenwände des Reaktors 14 immer frei von Ablagerungen bleiben.

Die Suspension 12 nach dem Injektor 140 besteht aus Sattdampf und nassem Schluff und entspannt sich nach dem Durchlaufen der Drossel 141 bei einem Druckabbau auf ca. 1,5 bar entsprechend dem Siedegleichgewicht spontan. In dem nachgeschalteten Dampfreaktor 143, der eigentlichen Rohrreaktionsstrecke, wird die Suspension 12 mit Hilfe einer indirekten Rohrwandheizung auf ca. 300 °C überhitzt, wobei allerdings die Energiezufuhr für die Überhitzung auch durch Verbrennung von Wasserstoff und Sauerstoff und/oder Methan und Sauerstoff erfolgen kann. Auch ist eine Energiezufuhr durch Injektion überhitzten Dampfes möglich. Am Ende des Rohrreaktors 14 befinden sich die zu entfernenden Schadstoffe der Suspension 12 in der überhitzten Dampfphase.

Der am Ende der Reaktorstrecke angeordnete eigentliche Dampfreaktor 143 dient der weiteren Dampfzufuhr, die gegebenenfalls nötig ist, um den Leistungsbereich eines dem Rohrreaktor 14 nachgeschalteten Feststoffabscheiders 15 in Abhängigkeit des zugeführten Stoffstroms anpassen zu können.

Der Feststoffabscheider 15 (Zyklon) kann hier beispielsweise durch eine erste und eine zweite Kaskadenstufe 150, 151 gebildet werden. In diesem Feststoffabscheider 15 wird Feststoff abgeschieden und beispielsweise als gereinigtes Gemisch 153, beispielsweise als gereinigtes Erdreich abgeschieden, gesammelt und einer weiteren Verwendung zugeführt. Aus dem Feststoffabscheider 15 tritt die mit Schadstoffen hoch angereicherte Dampfphase in einen nachgeschalteten Kondensator 16 ein und wird dort kondensiert. Das Kondensat 17 sammelt sich in einem Absetzbehälter 18. Dort werden alle nicht löslichen Schadstoffe aus dem Kondensat, beispielsweise Quecksilber, abgeschieden und in einem nachfolgenden Behälter 180 gesammelt und einer weiteren Verwendung zugeführt.

Das zum Betrieb des Kondensators 16 benötigte Kreislaufwasser 21 durchläuft eine Zwischenkühleinrichtung 19 und von dort eine Membrantrenneinrichtung 20, bei dem hier dargestellten Ausführungsbeispiel bestehend aus einer Ultrafiltrationseinrichtung 200 und einer weiteren Filtrationseinrichtung 201, die nach dem Prinzip der umgekehrten Osmose arbeitet, und wird dann einem hier nicht dargestellten Dampfkessel oder aber erneut dem Kondensator 16 zugeführt.

Eine dem Dampfaustritt des Kondensators 16 nachgeschaltet Vakuumpumpe 22 mit Puffertank (hier nicht dargestellt) sorgt für eine geeignete Druckeinstellung am Ausgang des Feststoffabscheiders 15, beispielsweise auf 0,8 bar.

Dem Gasausgang des Kondensators 16 bzw. der Vakuumpumpe 22, die dem Kondensator 16 nachgeschaltet ist, ist eine Abgasreinigungseinrichtung 23 nachgeschaltet, die beispielsweise aus einem Wäscher, einem katalytischen Wandler und einem Absorber besteht, wobei die Abluft 24 darin zusätzlich gereinigt und als gereinigte Abluft 24 an die Atmosphäre abgegeben wird. Sollten in der Abluft 24 noch hochtoxische Wasserstoffe vorhanden sein, bestünde die Möglichkeit, beispielsweise einen H₂/O₂-Brenner zur Nachverbrennung der Abluft der Abgasreinigungseinrichtung 23 nachzuschalten.

Das Verfahren zur Dekontaminierung von Schluff, Schadstoffen und Wasser enthaltenden Suspensionen 12, insbesondere Quecksilber und/oder Kohlenwasserstoff enthaltenden Schadstoffen, läuft gemäß der vorangehend beschriebenen Anordnung 10 folgendermaßen ab:

Die Suspension 12 wird im Rührkessel 13 unter Druck von 12 - 20 bar auf Siedetemperatur erwärmt. In dem nachfolgenden Rohrreaktor wird zu weiteren Aufheizung der Suspension 12 die Suspension bis auf annähernd Siedetemperatur gebracht, was im Injektor 140 erfolgt. Nachfolgend wird die Suspension 12 der Drossel 141 zugeführt, wobei anschließend das aus sich entwickelndem Dampf, Restwasser und Feststoff bestehende Dreiphasengemisch einer Überhitzerstrecke 142 zugeführt wird, die den eigentlichen Rohrreaktor 14 bildet, und dort mittels weiterer Energiezufuhr soweit überhitzt, daß sich in der überhitzten Dampfphase die Schadstoffe anreichern und diese schließlich nach vorheriger Abtrennung der Feststoffe gewinnbar bzw. sammelbar sind.

Versuche mit dem hier beschriebenen Verfahren bzw. der hier beschriebenen Anlage 10 haben gezeigt, daß quecksilberbelastete Schlufffraktionen durch Zugabe von Wasser und anschließender Erhitzung auf 300 °C von ca. 500 mg/kg Quecksilber (TS) auf einen Restgehalt von 1 mg/kg Quecksilber (TS) gereinigt werden können. Die Ergebnisse wurden in einem Laborreaktor ermittelt, der annähernd dem Aufbau der hier beschriebenen Anlage glich. Der Reaktionsraum hatte dabei ein Volumen von 6,87 1. Für eine analytische Aussage wurde quantitativ das in der Probenschleife enthaltende Quecksilber durch Chemosorption an einem Goldnetz amalgiert und anschließend zur Analyse durch Erhitzen desorbiert und mittels eines Inertgasstromes in ein Quecksilbermeßgerät geleitet und dort analysiert.

### Bezugszeichenliste

- 10: Anlage
- 11: Gemisch (Boden)
- 12: Suspension
- 13: Rührkessel
- 14: Rohrreaktor
- 140: Injektor
- 141: Drossel
- 142: Überhitzerstrecke
- 143: Injektor (Dampf)
- 15: Feststoffabscheider (Zyklon)
- 150: 1. Kaskadenstufe
- 151: 2. Kaskadenstufe
- 153: gereinigtes Gemisch
- 16: Kondensator
- 17: Kondensat
- 18: Absetzbehälter
- 180: Behälter
- 19: Zwischenkühler
- 20: Membrantrenneinrichtung
- 200: Ultrafiltrationseinrichtung
- 201: Filtration nach dem Prinzip der umgekehrten Osmose
- 21: Kreislaufwasser
- 22: Vakuumpumpe/Puffertank
- 23: Abgasreinigungseinrichtung
- 24: Abluft

## Patentansprüche

1. Verfahren zur Dekontaminierung von Schluff, Schadstoffe und Wasser enthaltenden Suspensionen, insbesondere Quecksilber und/oder Kohlenwasserstoff enthaltenden Schadstoffen, dadurch gekennzeichnet, daß die Suspension unter Druck auf Siedetemperatur erwärmt wird und nachfolgend einer Drosseleinrichtung zugeführt wird, wobei das aus sich entwickelndem Dampf, Restwasser und Feststoff bestehende Dreiphasengemisch danach einem Rohrreaktor zugeführt wird und dort mittels weiterer Energiezufuhr überhitzt wird, wobei sich in der überhitzten Dampfphase die Schadstoffe anreichern, so daß diese schließlich nach vorheriger Abtrennung der Feststoffe durch Kondensation in flüssiger Form gewinnbar sind.

2. Verfahren nach Anspruch 1, dadurch gekennzeichnet, daß die Dichte der Suspension > 1,2 kg/l beträgt und daß die Suspension bei einem Druck im Bereich von 12 - 30 bar erwärmt wird.

3. Verfahren nach einem oder beiden der Ansprüche 1 oder 2, dadurch gekennzeichnet, daß die Energiezufuhr im Rohrreaktor durch Injektion überhitzten Dampfes erfolgt.

4. Verfahren nach einem oder mehreren der Ansprüche 1 bis 3, dadurch gekennzeichnet, daß die Energiezufuhr im Rohrreaktor durch Verbrennung von Wasserstoff und Sauerstoff und/oder Methan und Sauerstoff erfolgt.

5. Verfahren nach einem oder mehreren der Ansprüche 1 bis 4, dadurch gekennzeichnet, daß in den Reaktor in einem nicht stöchiometrischen Verhältnis Wasserstoff zur Einleitung hydrierender oder oxidierender Reaktionen der Schadstoffe gegeben wird.

6. Verfahren nach einem oder mehreren der Ansprüche 1 bis 5, dadurch gekennzeichnet, daß das Dreiphasengemisch im Reaktor bei einem Reaktorinnendruck von 0,7 - 1 bar behandelt wird.

7. Verfahren nach einem oder mehreren der Ansprüche 1 bis 6, dadurch gekennzeichnet, daß das den Rohrreaktor verlassende Gemisch aus dampfförmigen Schadstoffen und Feststoffen in einem Feststoffabscheider (Zyklon) getrennt wird.

8. Verfahren nach einem oder mehreren der Ansprüche 1 bis 7, dadurch gekennzeichnet, daß die nicht kondensierbaren Anteile oder gasförmigen Schadstoffe einer Gasreinigung unterzogen werden.

9. Verfahren nach Anspruch 8, dadurch gekennzeichnet, daß die bei der Gasreinigung entzogenen Schadstoffe an Kontaktflächen adsorbiert werden.

10. Verfahren nach Anspruch 9, dadurch gekennzeichnet, daß die Kontaktflächen durch Aktivkohle gebildet werden.

11. Verfahren nach einem oder mehreren der Ansprüche 1 bis 10, dadurch gekennzeichnet, daß zur Kondensation der Schadstoffe benötigtes Wasser mittels wenigstens eines Membrantrennverfahrensschrittes gereinigt wird und wenigstens teilweise erneut zur Kondensation der Schadstoffe verwendet wird.

## Claims

1. Process for decontaminating suspensions containing silt, pollutants and water, especially pollutants containing mercury and/or hydrocarbon, characterised in that the suspension is heated under pressure to boiling temperature and is afterwards fed into a throttle device, whereby the resulting three-phase mixture consisting of evolving steam, residual water and solids is afterwards transferred to a tube reactor where it is superheated by further supply of energy, whereby the pollutants accumulate in the superheated vapour phase so that finally, after prior separation of the solids, they are obtainable in liquid form by condensation.

2. Process according to Claim 1, characterised in that the density of the suspension is > 1.2 kg/l and in that the suspension is heated at a pressure in the range from 12 - 30 bar.

3. Process according to one or both of the Claims 1 or 2, characterised in that the energy input into the tube reactor takes place by injection of superheated steam.

4. Process according to one or more of the Claims 1 to 3, characterised in that the energy input into the tube reactor takes place by the combustion of hydrogen and oxygen and/or methane and oxygen.

5. Process according to one or more of the Claims 1 to 4, characterised in that hydrogen is fed into the reactor in a non-stoichiometric ratio to initiate hydrogenating or oxidising reactions of the pollutants.

6. Process according to one or more of the Claims 1 to 5, characterised in that the three-phase mixture is treated in the reactor at a reactor internal pressure of 0.7 - 1 bar.

7. Process according to one or more of the Claims 1 to 6, characterised in that the mixture of vapour-phase pollutants and solids leaving the reactor is separated in a solids separator (cyclone).

8. Process according to one or more of the Claims 1 to 7, characterised in that the non-condensable fractions or gaseous pollutants are subjected to gas purification.

9. Process according to Claim 8, characterised in that the pollutant removed in the gas purification is adsorbed at contact surfaces.

10. Process according to Claim 9, characterised in that the contact surfaces are formed by active charcoal.

11. Process according to one or more of the Claims 1 to 10, characterised in that the water necessary for condensation of the pollutants is purified by means of at least one membrane separation process step and is at least partially re-used to condense the pollutants.

## Revendications

1. Procédé de décontamination de suspensions contenant du silt, des polluants et de l'eau, notamment des polluants contenant du mercure et/ou des hydrocarbures, caractérisé en ce que la suspension est chauffée sous pression à la température d'ébullition et ensuite amenée dans un dispositif d'étranglement, le mélange à trois phases composé de la vapeur qui se dégage, d'eau résiduelle et de solides est alimenté ensuite dans un réacteur tubulaire où il est surchauffé au moyen d'un apport d'énergie supplémentaire, les polluants s'enrichissant dans la phase vapeur surchauffée, de sorte que ces derniers peuvent finalement être récupérés sous forme liquide après séparation préalable des solides par condensation.

2. Procédé selon la revendication 1, caractérisé en ce que la densité de la suspension est > 1,2 kg/l et que la suspension est chauffée à une pression dans la plage de 12 à 30 bars.

3. Procédé selon l'une des revendications 1 ou 2 ou les deux, caractérisé en ce que l'apport d'énergie dans le réacteur tubulaire se fait par injection de vapeur surchauffée.

4. Procédé selon l'une ou plusieurs des revendications 1 à 3, caractérisé en ce que l'apport d'énergie dans le réacteur tubulaire se fait par combustion d'hydrogène et d'oxygène et/ou de méthane et d'oxygène.

5. Procédé selon l'une ou plusieurs des revendications 1 à 4, caractérisé en ce que l'on introduit de l'hydrogène selon un rapport non stoechiométrique dans le réacteur afin de déclencher des réactions d'hydrogénation ou d'oxydation des polluants.

6. Procédé selon l'une ou plusieurs des revendications 1 à 5, caractérisé en ce que le mélange à trois phases est traité dans le réacteur à une pression interne du réacteur de 0,7 à 1 bar.

7. Procédé selon l'une ou plusieurs des revendications 1 à 6, caractérisé en ce que le mélange de polluants sous forme de vapeur et de solides qui sort du réacteur . tubulaire est séparé dans un séparateur de solides (cyclone).

8. Procédé selon l'une ou plusieurs des revendications 1 à 7, caractérisé en ce que les parties non condensables ou les polluants gazeux sont soumis à une purification de gaz.

9. Procédé selon la revendication 8, caractérisé en ce que les polluants extraits lors de la purification de gaz sont adsorbés sur des surfaces de contact.

10. Procédé selon la revendication 9, caractérisé en ce que les surfaces de contact sont formées par du charbon actif.

11. Procédé selon l'une ou plusieurs des revendications 1 à 10, caractérisé en ce que l'eau nécessaire à la condensation des polluants est purifiée à l'aide d'au moins une étape d'un procédé de séparation sur membrane et réutilisée au moins en partie pour la condensation des polluants.
